# EUROPÄISCHE PATENTSCHRIFT

(11) **EP 0 888 868 B1**
(45) Veröffentlichungstag und Bekanntmachung des Hinweises auf die Patenterteilung: **25.09.2002**
(21) Anmeldenummer: 98108586.3
(22) Anmeldetag: 12.05.1998
(51) Int. Cl.: B29C 67/00, B29C 35/08

(54) **Verfahren und Vorrichtung zur Herstellung von dreidimensionalen Objekten**
Process and apparatus for producing three-dimensional objects
Procédé et dispositif de fabrication d'objets tridimensionnels

(30) Priorität: 30.06.1997 DE 19727677
(43) Veröffentlichungstag der Anmeldung: 07.01.1999
(73) Patentinhaber: Degussa AG, 40474 Düsseldorf (DE)
(72) Erfinder: Dröscher, Michael, Prof. Dr., 46286 Dorsten (DE); Schmidt, Friedrich Georg, Dr., 45721 Haltern (DE)

(56) Entgegenhaltungen:
- EP-A- 0 231 588
- EP-A- 0 431 924
- US-A- 4 392 039
- US-A- 5 217 656

## Beschreibung

Die Erfindung betrifft ein Verfahren und eine Vorrichtung zur Herstellung von dreidimensionalen Objekten.

Der traditionelle Entwicklungsprozeß eines Produktes mit den schematischen Srufen Zeichnung - Modell - Modellverfeinerung - Design - Prototyp - Kleinserie - Serie ist für die immer kürzer werdenden Produktzyklen in der industriellen Fertigung vielfach zu langsam.

Es wurden daher Methoden entwickelt, um Produkte schneller und unter Umgehung handwerklicher Zwischenstufen von einer Konstruktionszeichnung zu einem Prototyp oder zu einer Kleinserie zu entwickeln Diese Verfahren werden häufig unter den Begriffen "rapid prototyping" oder "fast free form manufacturing" zusammengefaßt.

Im Gegensatz zu formgebenden Verfahren, wie Fräsen oder Gießen, werden in Rapid Prototyping Systemen dreidimensionale Objekte durch kontrollierte und lokal begrenzte chemische Reaktionen (z. B. Polymerisation) oder physikalische Umwandlung (Schmelzen/Erstarren) aus Vorstufen des jeweiligen Materials ohne Verwendung von Hilfsmitteln wie Formen automatisiert gefertigt.

Einige Rapid Prototyping Systeme werden bereits industriell eingesetzt und sollen kurz skizziert werden.

### 1) Selektives Laser-Sintern

Bei Laser-Sinter-Verfahren (A. Gebhardt, "Rapid prototyping: Werkzeug für schnelle Produktentwicklung", Hauser Verlag, München, Wien 1996) werden pulverformige Materialien, in der Regel Kunststoffe, mit einem Laser schichtweise zu einem Objekt verschmolzen. Die eingesetzten Pulver werden bis kurz unter den Schmelzpunkt des Materials vorgeheizt. Unter der Einwirkung des Laserstrahls verschmelzen (sintern) die Pulverkörner miteinander. Mit einer geeigneten Vorrichtung wird dann die erzeugte Schicht abgesenkt und auf die bereits erhärtete Schicht eine neue Schicht Pulver aufgebracht, die wiederum mit dem Laser zum Erzeugen der nächsten Objektschicht bearbeitet wird. Vorteil dieser Technik ist die breite Anwendbarkeit, da zumindest theoretisch alle schmelzbaren pulverförmigen Materialien eingesetzt werden können. Nachteilig ist die sehr rauhe Oberfläche der hergestellten Objekte und die schwierig einzustellende Energieabgabe des Lasers. Hohe Laserenergien führen nicht zu einem Sintervorgang, sondern zum unerwünschten vollständigen Schmelzen der Pulverkörner, d. h. zu einem weitgehenden Verlust der formgebenden Eigenschaften. Zu niedrige Energien lassen insbesondere die Schichten nicht ausreichend miteinander verschmelzen, so daß die mechanische Stabilität des hergestellten Produkts mangelhaft ist.

### 2) Thermische Stereolithographie

US-PSS 5 121 329 und 5 141 680 offenbaren Verfahren, bei denen ein thermoplastisches Material mittels einer Düse schichtweise aufgetragen wird. Das Material wird flüssig oder zumindest plastisch verformbar aus der Düse auf eine Stützkonstruktion oder auf bereits erkaltete Schichten aufgetragen und erstarrt in der gewünschten Form. In der US-PS 4 665 492 wird ein ähnliches Verfahren beschrieben; hier wird das verflüssigte Material mittels mindestens zwei unabhängiger Partikelkanonen aufgetragen.

Nachteilig an diesen Verfahren ist die extrem schwierige Kontrolle der Detailauflösung.

### 3) Stereolithographie/Photopolymerisation

Bei Photopolymerisationsverfahren (A. Gebhardt, "Rapid prototyping: Werkzeug für schnelle Produktentwicklung", Hauser Verlag, München, Wien 1996) werden flüssige Monomere oder Oligomere unter UV-Strahlung zu einem festen Polymer vernetzt. Die meist radikalische Polymerisation kann durch den Zerfall eines Photoinitiators gestartet und wieder gestoppt werden. Als Monomere kommen Acrylatmischungen oder Epoxyharze, als Lichtquellen UV-Laser oder UV-Lampen mit einer Maskenblende zum Einsatz.

Der Aufbau des Objektes erfolgt ebenfalls schichtweise. Nachdem eine Schicht photochemisch erzeugt und auspolymerisiert ist, wird neues Monomer auf die bestehende Schicht aufgetragen und strahleninduziert polymerisiert. Das Auftragen der neuen Monomerenschicht kann beispielsweise durch Absenken der ausgehärteten Schicht in einem Vorratsbehälter des Monomeren erfolgen. Dieses Verfahren ermöglicht die Herstellung dreidimensionaler Objekte mit komplexen Hohlräumen. Problematisch ist die Energiezuftihr durch einen Laser, da die eingetragene Energie von der Eindringtiefe, d. h. der Flächenenergie des Lasers, den optischen Eigenschaften der Monomerenmischung und der verwendeten Wellenlänge der Laserstrahlung abhängt.

Die im Stand der Technik beschriebenen Rapid-Prototyping-Verfahren weisen den gemeinsamen Nachteil der schwierigen Kontrolle der Energiezufuhr, sei es zum Schmelzen von Pulverpartikeln oder zur Initiierung von chemischen Reaktionen, auf. Besonders problematisch ist diese Kontrolle bei größeren Schichtdicken, da die lokale Energieintensität stark von der Eindringtiefe abhängt. Größere lokale Energieintensitäten, wie sie für größere Eindringtiefen benötigt werden, sind aber nur mit einer höheren thermischen oder strahlenchemischen Belastung des verwendeten Materials verbunden. Höhere Energieintensitäten oder eine entsprechende Verlängerung der Anwendungszeit der Energiezufuhr sind im Hinblick auf thermisch instabile Materialien häufig nicht erwünscht.

Aus EP-0 431 924 ist ein Verfahren zur Herstellung von dreidimensionalen Objekten bekannt, bei dem ein pulverförmiges Material mittels Mikrowellenstrahlung mit einem Binder verklebt bzw. gehärtet wird. Der Einsatz von Mikrowellenstrahlung zum Aufbau von dreidimensionalen Objekten ist ebenfalls aus der US 5 217 656 bekannt Hier werden diskrete, feste Schichten durch punktförmig eingetragene Mikrowellenstrahlung aneinandergeheftet . Die dreidimensionale Formung des Objekts erfolgt durch nachträgliches Ausschneiden der so erhaltenen Laminate.

Aufgabe der vorliegenden Erfindung ist es, ein Rapid-Prototyping-Verfahren bereitzustellen, mit dessen Hilfe dreidimensionale Objekte hergestellt werden können. Die zur Formgebung benötigte Energie soll weitgehend ohne thermische und/oder strahlenchemische Belastung des Substrates erfolgen.

Es wurde nun überraschenderweise gefunden, dass die zur schichtweisen Herstellung von dreidimensionalen Objekten in Rapid-Prototyping-Systemen benötigte Energie durch Mikrowellenstrahlung zugeführt werden kann.

Gegenstand der vorliegenden Erfindung ist daher ein Verfahren zur schichtweisen Herstellung von dreidimensionalen Objekten, dadurch gekennzeichnet, dass die zur Herstellung der dreidimensionalen Objekte benötigte Energie durch Mikrowellenstrahlung ausschließlich innerhalb der zu generierenden Schicht des Objekts zugeführt wird.

Das erfindungsgemäße Verfahren ermöglicht einen schichtweisen, automatisierten Aufbau eines dreidimensionalen Objektes durch Mikrowellenbestrahlung eines geeigneten Substrats.

Weiterhin ist Gegenstand der vorliegenden Erfindung eine Vorrichtung zur schichtweisen Herstellung von dreidimensionalen Objekten, gemäß dem Patentanspruch 12 sowie eine Vorrichtung zur schicht weisen Herstellung von dreidimensionalen Objekten gemäß dem Patentanspruch 13.

Gemäß der Vorrichtung nach Anspruch 12 wird die zur Herstellung einer Schicht der dreidimensionalen Objekte benötigte Energie in Form von Mikrowellenstrahlung über eine in alle Raumrichtungen bewegliche Vorrichtung auf ein Substrat geleitet, wobei die Mikrowellenstrahlung ausschließlich innerhalb der zu generierenden Schicht des Objekts zugeführt wird.

Gemäß der Vorrichtung nach Anspruch 13 wird die zur Herstellung einer Schicht der dreidimensionalen Objekte benötigte Energie in Form von Mikrowellenstrahlung über eine in x, y-Ebene bewegliche Vorrichtung auf ein Substrat, welches sich auf oder in einer in z-Richtung beweglichen Vorrichtung befindet, geleitet und die Mikrowellenstrahlung wird ausschließlich innerhalb der zu generierenden Schicht des Objekts zugeführt.

Zweckmäßige Weiterbildungen der Erfindung sind Gegenstand der abhängigen Ansprüche.

Bevorzugt wird das erfindungsgemäße Verfahren so ausgeführt, das die bei der Herstellung der dreidimensionalen Objekte generierten Schichten untereinander verbunden sind.

Dies kann beispielsweise durch teilweises Verschmelzen der Schichten, durch einfache Adhäsion der Schichten untereinander oder durch Pfropfpolymerisation erfolgen.

Erster Schritt des erfindungsgemäßen Verfahrens ist die Bereitstellung der nötigen dreidimensionalen Information der Geometrie der herzustellenden Objekte. Dies kann durch computergestütztes Erstellen eines Konstruktionsplans oder durch Vermessen eines zu reproduzierenden Objektes und anschließende Verarbeitung der so erhaltenen Daten mit handelsüblichen CAD-Programmen (Computer aided design) wie z. B. AUTOCAD erfolgen. Diese Information muss nun, vorteilhaft mit dem gleichen CAD-Programm, in ein Schichtmodel mit einer von der gewünschten Präzision des zu erzeugenden Objektes abhängenden Schichtdicke umgewandelt werden ("slicing"). Dieser Prozess ist nicht nur auf die Generierung von mathematischen Schichten beschränkt, sondern umfasst ebenso die Einführung von Stützfünktionen für konstruktiv schwache Bauteile oder verfahrensbedingte Verbindungen in Hohlräumen. Die so erzeugten Schichten sind üblicherweise 0,1 bis 3 mm dick und stellen die eigentliche Konstruktionsinformation für die Fertigungseinheit dar.

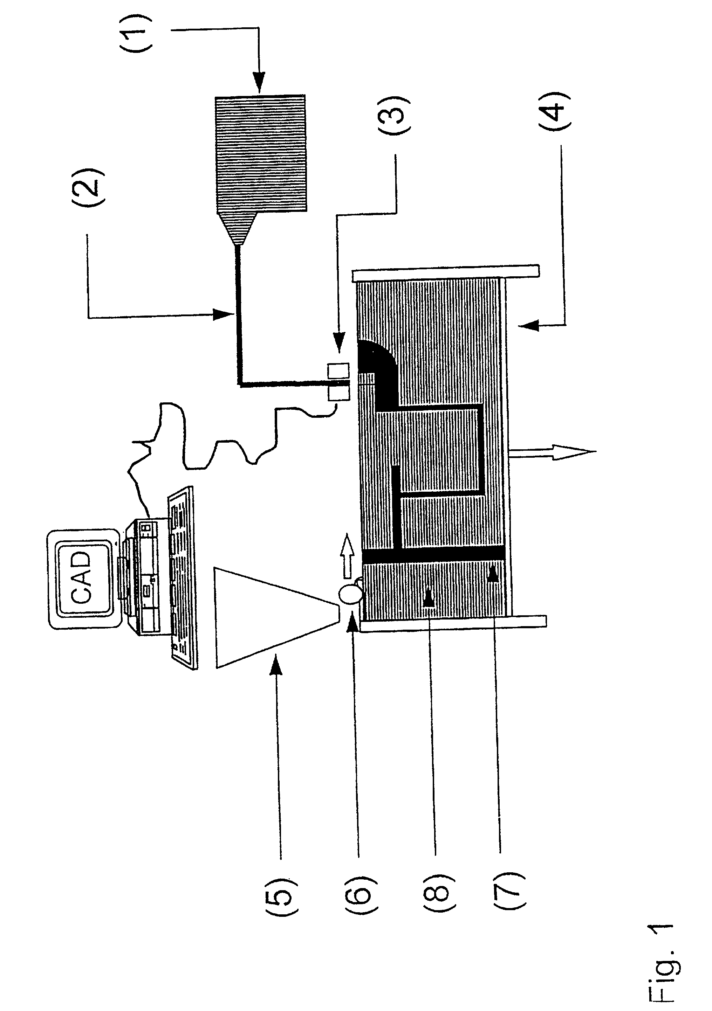

Anhand Figur 1 soll eine mögliche Ausfübrungsform der vorliegenden Erfindung erläutert werden.

Ein Mikrowellengenerator (1) liefert die Mikrowellenstrahlung über ein Leitungssystem (2) zu einem in der x, y-Ebene beweglichen Arm, der die Übertragungseinheit (3) für die Mikrowellenstrahlung trägt. Die als Mikrowellensonde ausgebildete Übertragungseinheit (3) kann gegebenenfalls eine Fokussierung der Mikrowellenstrahlung beinhalten. Der in z-Achse bewegliche Tisch (4) kann entsprechend der gewünschten und im Slicing-Vorgang berechneten Schichtdicke abgesenkt werden, während der bewegliche Arm (3) die Verteilung der Mikrowellenstrahlung in der Tischebene koordiniert. Das aus dem Vorratsbehälter (5) entnommene pulverförmige Substrat wird mittels einer Rakel (6) in einer definierten Schichtdicke in der Tischebene aufgetragen. Die Mikrowellensonde (3) überträgt dann die Mikrowellenstrahlung und erzeugt so schichtweise das dreidimensionale Objekt (7), das von nicht umgesetzten pulverförmigen Substrat (8) umgeben ist. Das nicht benötigte Substrat (8) kann, gegebenenfalls nach einer Aufbereitung (z. B. Sieben) wieder eingesetzt werden.

In einer anderen Variante der vorliegenden Erfindung ist der Tisch stationär ausgebildet, während der die Übertragungseinheit für die Mikrowellenstrahlung tragende Arm in alle Raumrichtungen beweglich ist.

Die beweglichen Teile der Vorrichtung (Mikrowellensonde (3) bzw. Tisch (4)) werden vorzugsweise vom CAD-Programm oder einem zusätzlichen Programm, das die CAD-Daten in eine entsprechende Robotik umwandelt, gesteuert.

Die für das erfindungsgemäße Verfahren erforderliche Mikrowellenstrahlung wird von einem externen Mikrowellengenerator erzeugt und liegt im Frequenzbereich von 300 MHz bis 300 GHz. Die in industriellen Prozessen eingesetzte und einer staatlichen Freigabe unterliegenden Frequenzen betragen in der Regel 430 bis 6 800 MHz (Encyclopedia of Chemical Processing and Design, Vol. 30, p. 202 ff., Marcel Dekker, N.Y.-Basel, 1989). Die vom externen Mikrowellensender ausgehende Strahlung wird gegebenenfalls polarisiert und/oder gefiltert und dem Substrat über den beweglichen Arm zugeführt. Zum Transport von Mikrowellenstrahlung eignen sich besonders Metallrohre oder innen und/oder außen metallbedampfte Glas- oder Kunststoffrohre (Encyclopedia of Science & Technologie, McGraw-Hill, Vol. II, p. 159 ff., 6. Auflage 1987). Der Transport der Mikrowellenstrahlung erfolgt zweckmäßig in flexiblen Rohren; denkbar sind jedoch auch kastenförmige Leitungssysteme. Der Durchmesser der Rohre sollte so gewählt sein, dass der Umfang größer als die Wellenlänge der eingesetzten Mikrowellenstrahlung ist. Der bewegliche Arm fungiert somit als Mikrowellensonde und kann gegebenenfalls Einrichtungen zur Fokussierung der Mikrowellenstrahlung besitzen.

Im erfindungsgemäßen Verfahren wird eine Mikrowellenstrahlung im Frequenzbereich 430 bis 6800 MHz eingesetzt

Die Mikrowellenstrahlung wird bevorzugt auf eine Strahlbreite von 0,1 bis 3 mm, besonders bevorzugt 0,3 bis 1 mm, fokussiert.

Die Strahlbreite legt gleichzeitig die minimalen Stegbreiten der dreidimensionalen Objekte fest.

Eine mögliche Ausführungsform der vorliegenden Erfindung ist ein Verfahren, bei dem die dreidimensionalen Objekte durch mikrowelleninduziertes Verschmelzen eines pulverförmigen Substrats hergestellt werden.

Dieses erfindungsgemäße Verfahren wird in einer Vorrichtung ausgeführt, mittels der die dreidimensionalen Objekte durch mikrowelleninduziertes Verschmelzen eines pulverförmigen Substrats hergestellt werden.

Das pulverförmige Substrat kann eine Körnung von 50 bis 100 µm aufweisen und enthält bevorzugt Polymere.

Die erfindungsgemäße Vorrichtung besitzt neben dem Tisch und dem als Mikrowellensonde ausgebildeten beweglichen Arm eine Vorrichtung zum Auftragen einer definierten Menge des Substratpulvers auf die Objektebene. Dies kann mittels einer Auftragewalze, einer Rakel und/oder eines beweglichen Vorratsbehälters erfolgen (siehe Figur 1). Entscheidend für die Qualität des erzeugten Objekts ist die Auftragung einer gleichmäßigen Schichtdicke.

Im erfindungsgemäßen Verfahren können alle pulverförmigen Substrate eingesetzt werden, die durch Mikrowellenstrahlung erwärmt werden, also eine dipolare Grundstruktur aufweisen. Hierzu zählen Polymere wie Polyester, Polycarbonate, Polyamide, Polyurethane und/oder ABS-Copolymere (Acrylnitril-Butadien-Styrol-Copolymer), aber auch mit diesen Polymeren beschichtete Keramik- oder Metallpulver, Weniger gut sind Polyolefine oder Polystyrol geeignet.

Die eingesetzten pulverförmigen Substrate sollten eine ausreichende Fließfähigkeit im erwärmten Zustand und eine monomodale oder bimodale Korngrößenverteilung aufweisen. Geeignet ist z. B. VESTOSINT® (Hüls AG, Marl).

Das erfindungsgemäße Verfahren beinhaltet folgende Schritte, die zyklisch wiederholt werden:
- Aufbringen einer definierten Schicht Substratpulver,
- Mikrowellenbestrahlung dieser Schicht mittels der Mikrowellensonde zur Erzeugung einer Schicht des Objekts, die mit einer gegebenenfalls bereits erzeugten Objektschicht fest verbunden ist,
- Absenken des Tisches um eine Schichtdicke.

Ist der als Mikrowellensonde ausgeführte, bewegliche Arm in alle Raumrichtungen beweglich, kann der Tisch fest installiert werden. Dieses Verfahren beinhaltet den folgenden Zyklus:
- Aufbringen einer definierten Schicht Substratpulver,
- Mikrowellenbestrahlung dieser Schicht mittels der Mikrowellensonde zur Erzeugung einer Schicht des Objekts, die mit einer gegebenenfalls bereits erzeugten Objektschicht fest verbunden ist,
- Anheben der Mikrowellensonde um eine Schichtdicke.

Um mögliche unerwünschte chemische Reaktionen zu vermeiden, kann unter einem Schutzgas wie Argon oder Stickstoff unter Ausschluß von Sauerstoff und Wasser gearbeitet werden. Bei Substraten, die von Wasser nicht angegriffen werden, kann anhaftendes Wasser als Wärmetransmitter wirken und so den Wärmefluß weiter verbessern.

Der zum Aufschmelzen des pulverförmigen Substrats benötigte Energieeintrag kann minimiert werden, indem das Pulver bereits auf einige Grad (2 bis 5 K) unter die Schmelz- bzw. Glastemperatur vorgeheizt wird.

Eine weitere Ausführungsform der vorliegenden Erfindung ist ein Verfahren, bei dem das Material eines dreidimensionalen Objekts durch eine mikrowelleninduzierte Polymerisation erhalten wird.

Diese Ausführungsform der vorliegenden Erfindung wird in einer Vorrichtung ausgeführt, mittels der das Material der dreidimensionalen Objekte durch mikrowelleninduzierte Polymerisation erhalten wird.

Bei dieser Ausführungsform wird die Monomerenmischung oder ein geeignetes Präpolymeres, gegebenenfalls mit Initiatoren, durch Mikrowellenstrahlung lokal schichtweise polymerisiert. Die auf diese Weise erhaltenen Schichten polymerisieren untereinander zu einem festen Verbund und bauen so das dreidimensionale Objekt auf.

Der Tisch der erfindungsgemäßen Vorrichtung ist bei dieser Ausführungsform vorzugsweise innerhalb des Monomerenreservoirs ausgebildet, so daß die erzeugte Schichtdicke von der Höhe der über der Tischebene stehenden Monomerenmischung abhängt.

Diese Ausführungsform des erfindungsgemäßen Verfahrens beinhaltet folgende Schritte, die zyklisch wiederholt werden:
- Absenken des Tisches um ein definiertes Maß unter die Oberfläche der Monomerenmischung,
- Mikrowellenbestrahlung dieser Schicht mittels der Mikrowellensonde zur Erzeugung einer Schicht des Objekts, die mit einer gegebenenfalls bereits erzeugten Objektschicht fest verbunden ist.

Eine mögliche Verfahrensalternative besteht darin, daß auf einen beweglichen Tisch verzichtet und eine in allen Raumrichtungen bewegliche Mikrowellensonde eingesetzt wird. Die Monomerenmischung wird so nachgeliefert, daß ein der gewünschten Schichtdicke entsprechender Überstand an Monomerenmischung über dem herzustellenden Objekt erzeugt wird.

Dieses Verfahren beeinhaltet den folgenden Zyklus:
- Aufbringen einer definierten Schicht Monomerenmischung
- Mikrowellenbestrahlung dieser Schicht mittels der Mikrowellensonde zur Erzeugung einer Schicht des Objekts, die mit einer gegebenenfalls bereits erzeugten Objektschicht fest verbunden ist,
- Anheben der Mikrowellensonde um eine Schichtdicke.

Die zur mikrowelleninduzierten Polymerisation eingesetzten Monomerenmischungen können folgende Monomere enthalten: Acrylate, Vinylether und/oder Epoxyharze sowie geeignete Initiatoren wie z. B. Azoisobuttersäuredinitril oder Benzoylperoxid bzw. andere Initiatoren, die unter den Betriebstemperaturen eine Zerfallhalbwertszeit im Sekundenbereich aufweisen.

Weiterhin können die Monomerenmischung polymerisierbare Oligomere oder Präpolymere aus diesen Monomeren enthalten.

Insbesondere bei radikalischen Polymerisationen sollte unter einem Schutzgas wie Stickstoff oder Argon unter Ausschluß von Sauerstoff und Wasser gearbeitet werden.

Die vollständige Aushärtung des Objekts kann gegebenenfalls nach Abschluß der formgebenden Schritte unter UV-Strahlung durchgeführt werden.

Die erfindungsgemäße Verwendung von Mikrowellenstrahlung besitzt folgende Vorteile gegenüber z. B. Laserbestrahlung:
- Die Aufheizung des Substrats erfolgt durch direkte Absorption der Strahlung ("innere Reibung") und nicht rein thermisch. Lokale Überhitzungen können so vermieden werden.
- Die Eindringtiefe der Mikrowellen ist nur von den dielektrischen Eigenschaften und nicht von optischen Kenngrößen des Substrats abhängig. Füllstoffe sind somit unproblematisch zuschlagbar; auch sind größere Eindringtiefen als bei Laserverfahren realisierbar.
- Laser mit ausreichender Leistung (CO₂- oder YAG-Laser) sind sehr teuer. Ihre Leistungsabgabe ist nur in engen Frequenzbereichen und Intensitäten regelbar. Mikrowellengeneratoren sind einfach aufgebaut, daher preiswert und durch Frequenzweichen oder Verstärker über weite Bereiche in ihrer Leistungsabgabe regelbar.

In Kenntnis des Erfindungsgedankens erschließen sich dem Fachmann weitere Ausführungsformen des erfindungsgemäßen Verfahren und der erfindungsgemäßen Vorrichtung.

Die Erfindung wird durch das nachfolgende Beispiel näher erläutert, ohne darauf beschränkt zu sein:

### Beispiel

In der durch Figur 1 beschriebenen Vorrichtung wird ein Bechermodell mit den Abmessungen Durchmesser 5 cm, Höhe 10 cm, Wandstärke 2 mm aus Polyamid 12-Pulver (VESTOSINT®, Fa. Hüls, Marl) hergestellt.

Als Wellenleiter wird ein auf der Innenseite metallisiertes, 2 mm dickes Kunststoffröhrchen (Wanddicke 0,2 mm), das in der x/y-Ebene positioniert wird, eingesetzt. Die Vorrichtung wird mit trockenen Stickstoff gespült und hat eine Betriebstemperatur von 160 °C. Die Frequenz des Mikrowellengenerators beträgt 2450 MHz.

## Patentansprüche

1. Verfahren zur schichtweisen Herstellung von dreidimensionalen Objekten,
**dadurch gekennzeichnet,**
**daß** die zur Herstellung der dreidimensionalen Objekte benötigte Energie durch Mikrowellenstrahlung ausschließend innerhalb der zu generierenden Schicht des Objekts zugeführt wird.

2. Verfahren nach Anspruch 1,
**dadurch gekennzeichnet,**
**daß** die bei der Herstellung der dreidimensionalen Objekte generierten Schichten untereinander verbunden sind.

3. Verfahren nach Anspruch 1 oder 2,
**dadurch gekennzeichnet,**
**daß** die dreidimensionalen Objekte durch mikrowelleninduziertes Verschmelzen eines pulverförmigen Substrats hergestellt werden.

4. Verfahren nach Anspruch 3,
**dadurch gekennzeichnet,**
**daß** das pulverförmige Substrat eine Körnung von 50 bis 100 µm aufweist.

5. Verfahren nach Anspruch 3 oder 4,
**dadurch gekennzeichnet,**
**daß** das pulverförmige Substrat Polymere enthält.

6. Verfahren nach Anspruch 3, 4 oder 5,
**dadurch gekennzeichnet,**
**daß** das pulverförmige Substrat Polyester, Polycarbonate, Polyamide, Polyurethane und/oder ABS-Copolymere enthält.

7. Verfahren nach Anspruch 1 oder 2,
**dadurch gekennzeichnet,**
**daß** das Material der dreidimensionalen Objekte durch eine mikrowelleninduzierte Polymerisation erhalten wird.

8. Verfahren nach Anspruch 7,
**dadurch gekennzeichnet,**
**daß** die zur mikrowelleninduzierten Polymerisation eingesetzten Monomerenmischungen Acrylate, Vinylether und/oder Epoxyharze enthalten.

9. Verfahren nach zumindest einem der Ansprüche 1 bis 8,
**dadurch gekennzeichnet,**
**daß** Mikrowellenstrahlung im Frequenzbereich 430 bis 6 800 MHz eingesetzt wird.

10. Verfahren nach zumindest einem der Ansprüche 1 bis 9,
**dadurch gekennzeichnet,**
**daß** die Mikrowellenstrahlung auf eine Strahlbreite von 0,1 bis 3 mm fokussiert wird.

11. Verfahren nach Anspruch 10,
**dadurch gekennzeichnet,**
**daß** die Mikrowellenstrahlung auf eine Strahlbreite von 0,3 bis 1 mm fokussiert wird.

12. Vorrichtung zur schichtweisen Herstellung von dreidimensionalen Objekten,
**dadurch gekennzeichnet,**
**daß** die zur Herstellung einer Schicht der dreidimensionalen Objekte benötigte Energie in Form von Mikrowellenstrahlung über eine in alle Raumrichtungen bewegliche Vorrichtung auf ein Substrat geleitet wird, wobei die Mikrowellenstrahlung ausschließlich innerhalb der zu generierenden Schicht des Objekts zugeführt wird.

13. Vorrichtung zur schichtweisen Herstellung von dreidimensionalen Objekten,
**dadurch gekennzeichnet,**
**daß** die zur Herstellung einer Schicht der dreidimensionalen Objekte benötigte Energie in Form von Mikrowellenstrahlung über eine in x, y-Ebene bewegliche Vorrichtung auf ein Substrat, welches sich auf oder in einer in z-Richtung beweglichen Vorrichtung befindet, geleitet wird und die Mikrowellenstrahlung ausschließlich innerhalb der zu generierenden Schicht des Objekts zugeführt wird.

## Claims

1. A method for producing three-dimensional objects in layers, **characterized in that** the energy required to produce the three-dimensional objects is supplied by microwave radiation exclusively within the layer of the object to be generated.

2. A method according to claim 1, **characterized in that** the layers generated in the production of the three-dimensional objects are interconnected.

3. A method according to claim 1 or 2, **characterized in that** the three-dimensional objects are produced by microwave-induced fusing of a pulverulent substrate.

4. A method according to claim 3, **characterized in that** the pulverulent substrate has a grain size of 50 to 100 µm.

5. A method according to claim 3 or 4, **characterized in that** the pulverulent substrate contains polymers.

6. A method according to claim 3, 4 or 5, **characterized in that** the pulverulent substrate contains polyesters, polycarbonates, polyamides, polyurethanes and/or ABS copolymers.

7. A method according to claim 1 or 2, **characterized in that** the material of the three-dimensional objects is obtained by a microwave-induced polymerization.

8. A method according to claim 7, **characterized in that** the monomer mixtures used for the microwave-induced polymerization contain acrylates, vinyl ethers and/or epoxy resins.

9. A method according to at least one of claims 1 to 8, **characterized in that** microwave radiation in the frequency range of 430 to 6800 MHz is used.

10. A method according to at least one of claims 1 to 9, **characterized in that** the microwave radiation is focused onto a beam width of 0.1 to 3 mm.

11. A method according to claim 10, **characterized in that** the microwave radiation is focused onto a beam width of 0.3 to 1 mm.

12. A device for producing three-dimensional objects in layers, **characterized in that** the energy required to produce a layer of the three-dimensional objects is directed in the form of microwave radiation onto a substrate via a device which can move in all directions in space, the microwave radiation being supplied exclusively within the layer of the object to be generated.

13. A device for producing three-dimensional objects in layers, **characterized in that** the energy required to produce a layer of the three-dimensional objects is directed, via a device which can move in the x,y-plane, in the form of microwave radiation onto a substrate which is located on or in a device which can move in the z-direction, and the microwave radiation is supplied exclusively within the layer of the object to be generated.

## Revendications

1. Procédé de fabrication d'objets tridimensionnels par couches,
**caractérisé en ce qu'**
on fournit l'énergie nécessaire à la fabrication des objets tridimensionnels uniquement par un rayonnement de micro-ondes à l'intérieur de la couche de l'objet à former.

2. Procédé selon la revendication 1,
**caractérisé en ce que**
les couches générées pour la fabrication de l'objet tridimensionnel sont reliées entre elles,

3. Procédé selon l'une quelconque des revendications 1 ou 2,
**caractérisé en ce qu'**
on fabrique les objets tridimensionnels par fusion induite par des micro-ondes d'un substrat pulvérulent,

4. Procédé selon la revendication 3,
**caractérisé en ce que**
le substrat pulvérulent a une granulométrie comprise entre 50 et 100 µm.

5. Procédé selon l'une quelconque des revendications 3 ou 4,
**caractérisé en ce que**
le substrat pulvérulent contient des polymères.

6. Procédé selon l'une quelconque des revendications 3, 4 ou 5,
**caractérisé en ce que**
le substrat pulvérulent contient des polyesters, des polycarbonates, des polyamides, des polyuréthanes et/ou des copolymères ABS.

7. Procédé selon l'une quelconque des revendications 1 ou 2,
**caractérisé en ce que**
la matière des objets tridimensionnels est obtenue par une polymérisation induite par des micro-ondes.

8. Procédé selon la revendication 7,
**caractérisé en ce que**
les mélanges de monomères utilisés pour la polymérisation induite par des micro-ondes contiennent des acrylates, des vinyles éthers et/ou des résines époxy.

9. Procédé selon l'une quelconque des revendications 1 à 8,
**caractérisé en ce que**
le rayonnement de micro-ondes est dans le domaine des fréquences de 430 à 6 800 MHz,

10. Procédé selon l'une quelconque des revendications 1 à 9,
**caractérisé en ce que**
le rayonnement de micro-ondes est focalisé sur une largeur de faisceau de 0,1 à 3 mm.

11. Procédé selon la revendication 10,
**caractérisé en ce que**
le rayonnement de micro-ondes est focalisé sur une largeur de faisceau comprise entre 0,3 et 1 mm,

12. Dispositif pour la fabrication couche par couche d'objets tridimensionnels,
**caractérisé en ce que**
l'énergie nécessaire pour la fabrication d'une couche de l'objet tridimensionnel est fournie par un rayonnement à micro-ondes par un dispositif mobile dans toutes les directions de l'espace que l'on conduit sur un substrat, le rayonnement de micro-ondes étant fourni exclusivement à l'intérieur de la couche de l'objet à générer.

13. Dispositif de fabrication couche par couche d'objets tridimensionnels,
**caractérisé en ce que**
l'énergie nécessaire à la fabrication d'une couche de l'objet tridimensionnel est fournie sous la forme d'un rayonnement de micro-ondes par un dispositif mobile dans le plan x, y sur un substrat qui est mobile dans la direction z du dispositif, et le rayonnement de micro-ondes est fourni exclusivement à l'intérieur de la couche de l'objet à générer.
